# EUROPÄISCHE PATENTSCHRIFT

(11) **EP 0 905 421 B1**
(45) Veröffentlichungstag und Bekanntmachung des Hinweises auf die Patenterteilung: **22.10.2003**
(21) Anmeldenummer: 97810707.6
(22) Anmeldetag: 25.09.1997
(51) Int. Cl.: F16J 15/32

(54) **Bürstendichtung**
Brush seal
Joint-brosse

(43) Veröffentlichungstag der Anmeldung: 31.03.1999
(73) Patentinhaber: ALSTOM (Switzerland) Ltd, 5401 Baden (CH)
(72) Erfinder: Römer, Harald, 79761 Waldshut (DE); Roth, Heinrich, 79787 Lauchringen (DE); Dierke, Olaf, 69469 Weinheim (DE)

(56) Entgegenhaltungen:
- DE-A- 2 931 714
- FR-A- 379 209
- FR-A- 584 619
- US-A- 1 419 927
- US-A- 5 026 075
- US-A- 5 066 025

## Beschreibung

### Technisches Gebiet

Die Erfindung betrifft eine Bürstendichtung zur Abdichtung des Spaltes zwischen einem rotierenden und einem stillstehenden Bauteil, bei welcher eine Mehrzahl von radial einwärts verlaufenden, elastisch biegsamen Bürsten mit einem Ende in einem in einem ersten der Bauteile einliegenden Grundkörper gehalten ist und mit dem anderen Ende an einem ringförmigen anderen Bauteil dichtend anliegt, und wobei die Bürsten in ihrer überwiegenden Längserstreckung an einem Führungsblech anliegen, wobei sowohl der Grundkörper als auch das Führungsblech in einer Nut eines der Bauteile einliegen.

### Stand der Technik

Eine derartige Bürstendichtung ist bekannt aus der Patentschrift US 5 066 025. Bei dieser Ausführung sind beidseitig der Bürsten Führungsbleche vorgesehen, welche gleichzeitg einen Grundkörper bilden, in dem die Bürsten gehalten sind.

Der Grundkörper selbst ist zwischen einem Hinterschnitt des Gehäuses und einem Befestigungsring axial fixiert. Um die Beweglichkeit der Bürsten zu gewährleisten, ist eines der Seitenbleche zwecks Bildung eines Axialspalts zwischen Blech und Bürste ausgespart. Mit dieser Massnahme wird es ermöglicht, die radiale Länge der beiden Seitenbleche bis zum minimal zulässigen Spiel auszulegen.

Nach einem anderen in GB 1 598 926 beschriebenen Lösungsvorschlag ist eines der Seitenbleche abgewinkelt und dient der Befestigung der Bürstendichtung am Gehäuse, wobei die Befestigung über Niete erfolgt. Die Bürsten selbst sind an einem ihrer Enden mit den Seitenblechen verschweisst.

Bei einer weiteren aus der GB-A 2 066 382 bekannten Lösung sind die Bürsten ebenfalls an einem ihrer Enden mit den Seitenblechen zu einem soliden Block verschweisst. Die Dichtung wird im Gehäuse mittels eines mit einem Aussengewinde versehenen Ringes axial und radial gehalten.

Bei diesen bekannten Ausführungsformen, sofern sie bei Turbomaschinen Anwendung finden, hat eine der Seitenflächen die Aufgabe, die Bürstenfasern gegen die vom Druck auf der Hochdruckseite herrührende Kraft zu stützen und so Dichtungsverluste geringer zu halten. Je höher der Druck auf der Hochdruckseite ist, desto geringer muss der Spalt zwischen Seitenwand und gegenüberliegendem Bauteil sein, damit die Bürsten, d.h. die sie bildenden Fasern, nicht zu weit zurückfedern und so einen zu grossen Dichtspalt ergeben. Bei solchen Bürstendichtungen kann ein durch die Einbaubedingungen oder die thermischen und rotordynamischen Gegebenheiten erforderliches Spiel nicht unterschritten werden.

DE 29 31 714 stellt eine Einbauart für eine berührungsfreie Labyrinthdichtung vor. Die Dichtstreifen werden in umlaufend ausgebildete Umfangsnuten des Stators eingesetzt und mittels eines Drahtes daselbst eingestemmt.
Dichtstreifen und Bürsten basieren im Betrieb auf unterschiedlichen Wirkungsweisen und stellen daher unterschiedliche Anforderungen an den Einbau. Letztere zielen nicht auf Berührungsfreiheit und haben eine zerstörungsfreie Ausweichmöglichkeit. Um dies zuverlässig zu gewährleisten, stellen Bürstendichtungen gegenüber Streifendichtungen höhere Einbauanforderungen.

### Darstellung der Erfindung

Der Erfindung liegt die Aufgabe zugrunde, bei einer Bürstendichtung der eingangs genannten Art eine einfache und platzsparende Befestigung zu schaffen.

Erfindungsgemäss wird dies erreicht durch eine Bürstendichtung zur Abdichtung des Spalts zwischen einem rotierenden und einem stillstehenden Bauteil, bei welcher eine Mehrzahl von radial einwärts verlaufenden, elastisch biegsamen Bürsten mit einem Ende in einem in einem ersten der Bauteile einliegenden Grundkörper gehalten ist und mit dem anderen Ende an einem ringförmigen anderen Bauteil dichtend anliegt, wobei die Bürsten in ihrer überwiegenden Längserstreckung an einem Führungsblech anliegen, und sowohl der Grundkörper als auch das Führungsblech in einer Nut eines der Bauteile einliegen, die sich dadurch auszeichnet, dass sowohl der Grundkörper als auch das Führungsblech mittels eines in die Nut eingestemmten Drahtes in ihrer gegenseitigen Lage gehalten sind, und dass das Führungsblech auf der den Bürsten zugekehrten Seite eine radial verlaufende Aussparung aufweist, auf der sich der Grundkörper mit einem Schenkel abstützt.

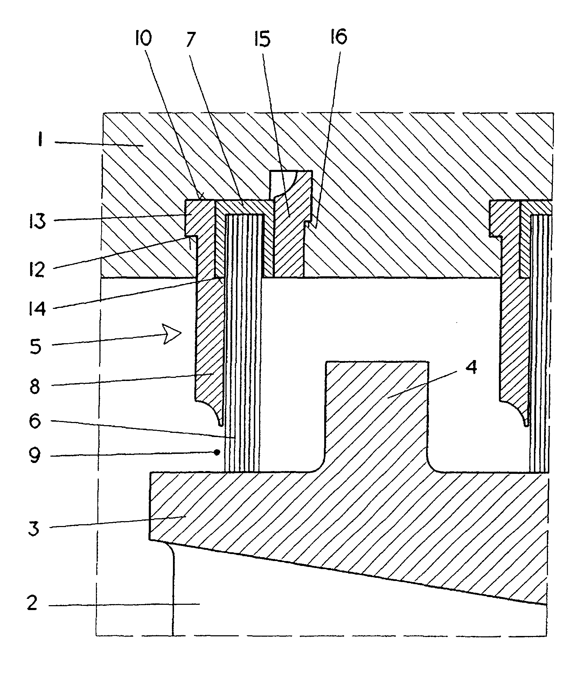

### Kurze Beschreibung der Zeichnung

In der Zeichnung ist ein Ausführungsbeispiel der Erfindung anhand einer axial durchströmten Turbomaschine dargestellt. Die einzige Figur zeigt eine Bürstendichtung im Axialschnitt. Es sind nur die für das Verständnis der Erfindung wesentlichen Elemente gezeigt.

### Weg zur Ausführung der Erfindung

Im Beispielsfall handelt es sich beim gezeigten Ausschnitt um die Deckplattendichtung einer Hochdruckdampfturbine. Mit (1) ist als stillstehendes Bauteil der Schaufelträger bezeichnet, mit (2) als rotierendes Bauteil eine Laufschaufel, welche an ihrem Schaufelende mit einer Deckplatte (3) versehen ist. Die Deckplatte (3) kann mehrere Zacken (4) aufweisen, die zwecks Bildung von Wirbelkammern einen möglichst engen Spalt gegen das Gehäuse (1) definieren. Beidseits des Zackens (4) sind in der Deckplatteneinbettung des Gehäuses (1) mehrere Bürstendichtungen (5) vorgesehen.

Diese Bürstendichtung (5) besteht im wesentlichen aus einem Büschel neben- und hintereinander angeordneter elastisch biegsamer Einzelbürsten (6), welche mit einem ihrer Enden an der ringförmigen Deckplatte (3) dichtend anliegen. In der Zeichnungsebene sind die Bürsten (6) radial einwärts verlaufend dargestellt. In Wirklichkeit verlaufen die Bürsten (6) indes mit Vorteil schräg in Umfangsrichtung.

Mit ihrem anderen Ende sind die Bürsten (6) in einem im Gehäuse (1) versenkten Grundkörper (7) gehalten. In diesem Zusamenhang ist es bereits bekannt geworden, die Bürsten (6) mit dem Grundkörper (7) zu verkleben. Es versteht sich, dass jede geeignete Befestigungstechnik hier angewendet werden kann, wobei den thermischen und mechanischen Belastungen Rechnung zu tragen ist. Der Grundkörper (7) ist im dargestellten Beispiel ein einfaches U-Profil, welches auf Durchmesser gewalzt sein kann.

Die Bürsten (6) liegen auf einer Seite fast über ihre ganze Länge an einem Führungsblech (8) an. Der verbleibende Spalt (9), welcher durch die Bürsten (6) abzudichten ist, wird auf das für den Maschinenbetrieb notwendige Minimalmass dimensioniert.

Der Grundkörper (7) und das Führungsblech (8) liegen in einer Nut (10) des Gehäuses (1) ein. Diese Nut (10) weist ein Aussparung (12) auf, in welche das Führungsblech (8) mit einer entsprechenden Schulter (13) eingehängt ist. Auf der den Bürsten (6) zugekehrten Seite weist das Führungsblech (8) eine Aussparung (14) auf, auf der sich der Grundkörper 7 mit einem seiner Schenkel abstützt. Grundkörper (7) und Führungsblech (8) sind mittels eines in die Nut (10) eingestemmten Drahtes (15) in ihrer gegenseitigen Lage gehalten. Im eingestemmten Zustand ist der Draht (15) einerseits bündig mit der Wandung der Deckplatteneinbettung, anderseits ist sein in die Nut (10) eingeschlagener Teil an seinem oberen Ende derart deformiert, dass er in eine weitere Aussparung (16) der Nut (10) eingreift.

Die neue Massnahme ist besonders vorteilhaft bei Maschinen mit geteiltem Gehäuse, beispielsweise mit horizontaler Trennebene, da hier genügend Platz für das Anbringen der erforderlichen Einstemmwerkzeuge vorhanden ist.

Selbstverständlich ist die Erfindung nicht auf das gezeigte und beschriebene Ausführungsbeispiel beschränkt. So ist es denkbar, dass auch das rotierende Bauteil mit der Bürstendichtung versehen werden kann.

### Bezugszeichenliste

- 1: stillstehendes Bauteil, Schaufelträger
- 2: rotierendes Bauteil, Laufschaufel
- 3: Deckplatte
- 4: Zacken
- 5: Bürstendichtung
- 6: Einzelbürste
- 7: Grundkörper
- 8: Führungsblech
- 9: Spalt
- 10: Nut
- 12: Aussparung von 10
- 13: Schulter von 8
- 14: Ausparung von 8
- 15: Draht
- 16: Aussparung von 10

## Patentansprüche

1. Bürstendichtung zur Abdichtung des Spaltes (9) zwischen einem rotierenden und einem stillstehenden Bauteil (1; 2), bei welcher eine Mehrzahl von radial einwärts verlaufenden, elastisch biegsamen Bürsten (6) mit einem Ende in einem in einem ersten der Bauteile (1) einliegenden Grundkörper (7) gehalten ist und mit dem anderen Ende an einem ringförmigen anderen Bauteil (2) dichtend anliegt, wobei die Bürsten (6) in ihrer überwiegenden Längserstreckung an einem Führungsblech (8) anliegen, und sowohl der Grundkörper (7) als auch das Führungsblech (8) in einer Nut (10) eines der Bauteile (1;2) einliegen, **dadurch gekennzeichnet, dass** sowohl der Grundkörper (7) als auch das Führungsblech (8) mittels eines in die Nut (10) eingestemmten Drahtes (15) in ihrer gegenseitigen Lage gehalten sind, und dass das Führungsblech (8) auf der den Bürsten (6) zugekehrten Seite eine radial verlaufende Aussparung (14) aufweist, auf der sich der Grundkörper (7) mit einem Schenkel abstützt.

## Claims

1. Brush seal for sealing off the gap (9) between a rotating and a stationary component (1; 2), in which seal a plurality of radially inwardly running, elastically flexible brushes (6) are held at one end in a basic body (7) seated in a first of said components (1) and bear sealingly at the other end on the annular other component (2), the brushes (6) bearing, over their predominant longitudinal extent, on a guide plate (8), and both the basic body (7) and the guide plate (8) being seated in a groove (10) of one of the components (1; 2), **characterized in that** both the basic body (7) and the guide plate (8) are held in their mutual position by means of a wire (15) caulked into the slot (10), and **in that** the guide plate (8) has, on the side facing the brushes (6), a radially running cutout (14), on which the basic body (7) is supported with one leg.

## Revendications

1. Joint à brosses pour rendre étanche la fente (9) entre un composant rotatif et un composant immobile (1 ; 2), dans lequel une pluralité de brosses élastiquement souples (6), orientées radialement vers l'intérieur, sont maintenues par une extrémité dans un corps de base (7) logé dans un premier des composants (1) et sont appliquées hermétiquement par leur autre extrémité contre un autre composant annulaire (2), et dans lequel les brosses (6) sont appliquées sur la plus grande partie de leur longueur contre une tôle de guidage (8), aussi bien le corps de base (7) que la tôle de guidage (8) étant logés dans une rainure (10) de l'un des composants (1 ; 2), **caractérisé en ce qu'**aussi bien le corps dé base (7) que la tôle de guidage (8) sont maintenus dans leur position mutuelle au moyen d'un fil (15) encastré dans la rainure (10), et **en ce que** la tôle de guidage (8) présente, du côté tourné vers les brosses (6), un retrait (14) s'étendant radialement sur lequel s'appuie le corps de base (7) avec une branche.
